# EUROPÄISCHE PATENTANMELDUNG

(11) **EP 4 606 744 A1**
(43) Veröffentlichungstag der Anmeldung: **27.08.2025**
(21) Anmeldenummer: 25158470.2
(22) Anmeldetag: 18.02.2025
(51) Int. Cl.: B65G 47/64, B65B 21/24, B65B 59/00

(54) **VORRICHTUNG UND VERFAHREN ZUM UMGANG MIT GETRÄNKEBEHÄLTERN**

(30) Priorität: 23.02.2024 DE 102024105116
(71) Anmelder: KRONES Aktiengesellschaft, 93073 Neutraubling (DE)
(72) Erfinder: WIMMER, Thomas, 93073 Neutraubling (DE); WITTMANN, Stephan, 93073 Neutraubling (DE)
(74) Vertreter: Benninger, Johannes

(57) **Zusammenfassung**

Es werden eine Vorrichtung (10) sowie ein Verfahren zum Umgang mit Getränkebehältern offenbart. Die Vorrichtung (10) umfasst eine Horizontalfördereinrichtung (12) zur Bewegung von Getränkebehältern und ein Transportmodul (18) zur Fortbewegung der Getränkebehälter, die von der Horizontalfördereinrichtung (12) auf das Transportmodul (18) übergetreten sind.

Es ist vorgesehen, dass das Transportmodul (18) zur Einnahme wenigstens zweier unterschiedlicher Betriebsausrichtungen ausgebildet ist, wobei eine Transportebene (20) des Transportmoduls (18) in einer ersten Betriebsausrichtung horizontal orientiert ist und in einer zweiten Betriebsausrichtung gegenüber einer Horizontalen geneigt ist.

## Beschreibung

Die vorliegende Erfindung betrifft eine Vorrichtung sowie ein Verfahren zum Umgang mit Getränkebehältern.

Um einzelne Getränkebehälter zu mehreren zusammenzufassen und auch zu mehreren zu verpacken, ist es bereits bekannt, die Getränkebehälter zunächst über eine Transportvorrichtung von einer ersten Arbeitsstation zu einer stromabwärts nachgeordneten weiteren Arbeitsstation zu bewegen. Sollen sich für die Getränkebehälter nach einiger Zeit der Durchführung eines definierten Verpackungsprozesses die Parameter des Verpackungsprozesses ändern, so dass bspw. andere sekundäre oder tertiäre Verpackungsmittel verwendet werden sollen, so müssen die hierfür eingesetzten Vorrichtungen durch einen Austausch oder eine Modifikation der jeweiligen Transportvorrichtung an den durchzuführenden Verpackungsprozess angepasst werden.

Eine Vorrichtung, bei der bedarfsweise ein solcher Austausch von einzelnen Komponenten erfolgen kann, ist bspw. aus der WO 2012 062 549 A1 bekannt. Dieses Dokument offenbart eine Maschine zur Verarbeitung und/oder Verpackung von Gegenständen mit einer im Wesentlichen horizontalen Transportstrecke zur Förderung von Artikeln, Gebinden und/oder Verpackungseinheiten. Die Maschine umfasst eine erste Horizontalfördereinrichtung mit wenigstens einem Transportmittel für einen ersten Betriebsmodus, welche erste Horizontalfördereinrichtung zur Herstellung mindestens eines weiteren Betriebsmodus durch eine weitere Horizontalfördereinrichtung mit wenigstens einem zum ersten Transportmittel unterschiedlichen zweiten Transportmittel auswechselbar ist.

Die weitere Horizontalfördereinrichtung ist bei Nichtbenutzung oberhalb der ersten Horizontalfördereinrichtung aufgehängt. Soll die weitere Horizontalfördereinrichtung anstelle der ersten Horizontalfördereinrichtung verwendet werden, so muss die weitere Horizontalfördereinrichtung unter Zuhilfenahme eines Krans abgesenkt und in einen für Artikel vorgesehenen Transportweg eingesetzt werden. Ein solches Einbringen der weiteren Horizontalfördereinrichtung in den Transportweg erfordert aufgrund des hierfür notwendigen Absenkens einen komplexen Aufbau der Vorrichtung und ist häufig mit größerem Zeitaufwand verbunden.

Eine Aufgabe der Erfindung kann somit darin gesehen werden, eine Vorrichtung und ein entsprechendes Verfahren bereitzustellen, mit denen auf einfache Art und Weise zwischen unterschiedlichen Betriebsmodi gewechselt werden kann.

Die obige Aufgabe wird mit den Gegenständen gelöst, welche die Merkmale in den unabhängigen Ansprüchen umfassen. Weitere vorteilhafte Ausgestaltungen werden durch die jeweiligen abhängigen Ansprüche beschrieben.

Zur Lösung der Aufgabe schlägt die vorliegende Erfindung eine Vorrichtung zum Umgang mit Getränkebehältern vor. Bei diesen Getränkebehältern kann es sich bspw. um Getränkeflaschen oder um Getränkedosen handeln.

Bestandteil der Vorrichtung ist eine Horizontalfördereinrichtung zur Bewegung von Getränkebehältern. Die Horizontalfördereinrichtung kann insbesondere ein umlaufend angetriebenes Transportband umfassen, über das die Getränkebehälter bewegt werden. Mit einem solchen umlaufend angetriebenen Transportband kann bspw. eine Förderkette, eine Mattenkette, Gliederkette o. dgl. Fördereinrichtung gemeint sein, deren Oberseite eine sich in definierter Förderrichtung fortbewegende Auflage- und Transportebene für die Getränkebehälter bereitstellt.

Die Vorrichtung kann zudem einen Einteiler umfassen, der aus den beförderten Getränkebehältern Getränkebehältergruppen bildet und an die Horizontalfördereinrichtung übergibt. Auf der Horizontalfördereinrichtung können daher Getränkebehältergruppen bewegt werden, die jeweils mehrere Getränkebehälter umfassen oder aus jeweils mehreren Getränkebehältern bestehen.

Zudem ist ein Transportmodul zur Fortbewegung von Getränkebehältern vorgesehen, die von der Horizontalfördereinrichtung auf das Transportmodul übergetreten sind. Das Transportmodul schließt daher unmittelbar an die Horizontalfördereinrichtung an, so dass Getränkebehälter von der Horizontalfördereinrichtung auf das Transportmodul übertreten können.

Es kann außerdem sinnvoll bzw. bevorzugt vorgesehen sein, dass die Horizontalfördereinrichtung und das Transportmodul mit einer Steuereinrichtung in Verbindung stehen, welche derart konfiguriert, programmiert und ausgestattet ist, dass die Horizontalfördereinrichtung und das Transportmodul über die Steuereinrichtung zur Bewegung von Getränkebehältern mit einer im Wesentlichen aufeinander abgestimmten, insbesondere identischen Transportgeschwindigkeit ansteuerbar sind. Die aufeinanderfolgenden Getränkebehälter oder die aufeinanderfolgenden Getränkebehältergruppen können daher auf der Horizontalfördereinrichtung einen relativen Abstand zueinander besitzen, der durch den Übertritt von der Horizontalfördereinrichtung auf das Transportmodul nicht verändert wird.

Es ist weiterhin vorgesehen, dass das Transportmodul zur Einnahme wenigstens zweier unterschiedlicher Betriebsausrichtungen ausgebildet ist, wobei eine Transportebene des Transportmoduls in einer ersten Betriebsausrichtung horizontal orientiert ist und in einer zweiten Betriebsausrichtung gegenüber einer Horizontalen bzw. gegenüber einer horizontal verlaufenden Ebene geneigt ist.

Insbesondere kann das Transportmodul in der zweiten Betriebsausrichtung gegenüber der Horizontalen bzw. gegenüber der horizontal verlaufenden Ebene um einen Winkel geneigt sein, welcher kleiner als 20°, vorzugsweise kleiner als 10° ist. Besonders bevorzugt kann zudem ein Neigungswinkel kleiner als 5° sein. Zudem können auch noch deutlich kleinere Neigungswinkel als die angegebenen 5° sinnvoll sein, um die das Transportmodul in der zweiten Betriebsausrichtung gegenüber der Horizontalen geneigt sein kann. So haben sich bspw. Einstellungen in der Praxis als sinnvoll erwiesen, bei denen das Transportmodul einseitig um einen Betrag von ca. zwei Millimeter, bezogen auf eine Gesamtlänge von ca. fünf Metern, abgesenkt sein kann.

Diese beispielhaft angegebenen Neigungswerte definieren normalerweise einen Transportweg für das Transportmodul, der in Förderrichtung ansteigt.

Außerdem können alle diese beispielhaft angegebenen Neigungswerte, in welche das Transportmodul bedarfsweise gebracht werden kann, über geeignete Raststufen in reproduzierbarer Weise eingestellt werden, was bspw. über einen geeigneten Klinkenmechanismus realisiert sein kann.

Für unterschiedliche Verpackungsprozesse bzw. für unterschiedliche Betriebsmodi kann es außerdem sinnvoll sein, dass unterschiedliche Fördereinrichtungen verwendet werden, die an das Transportmodul anschließen. So ist denkbar, dass in einem ersten Betriebsmodus eine Fördereinrichtung an das Transportmodul anschließt, die Getränkebehälter auf einem ersten Höhenniveau bewegt.

In einem weiteren Betriebsmodus kann diese Fördereinrichtung ausgetauscht und durch eine weitere Fördereinrichtung ggf. ersetzt werden, welche Getränkebehälter auf einem zweiten Höhenniveau bewegt. Da das Transportmodul bei der zweiten Betriebsausrichtung gegenüber der Horizontalen geneigt ist, lassen sich hierdurch auf einfache Art und Weise unterschiedliche Höhenniveaus überwinden.

Bewährt haben sich in der Praxis Ausführungsformen, bei denen mittels der Neigung des Transportmoduls in der zweiten Betriebsausrichtung ein Schlitz oder ein Spalt ausgebildet wird, wie dies nachfolgend noch beschrieben ist. Ein solcher Schlitz oder Spalt zwischen den aufeinanderfolgenden Transporteinheiten kann bspw. dafür genutzt werden, um benötigte Unterlagen aus flachem Verpackungsmaterial wie bspw. Kartonmaterial dort in die Transportbahn einzubringen. So ist es hierdurch bspw. möglich, sog. Auflagepads aus geeignetem Verpackungsmaterial wie bspw. Kartonmaterial durch den Schlitz oder Spalt in den Transportweg der gruppierten Getränkebehälter einzubringen.

Wie schon erwähnt, kann es vorzugsweise sein, dass die Transportebene des Transportmoduls in der zweiten Betriebsausrichtung derart gegenüber der Horizontalen geneigt ist, dass die Transportebene entlang einer Transportrichtung des Transportmoduls ansteigt.

Alternativ hierzu kann es jedoch für bestimmte Konfigurationen auch sinnvoll sein, wenn die Transportebene des Transportmoduls in der zweiten Betriebsausrichtung derart gegenüber der Horizontalen geneigt ist, dass die Transportebene entlang einer Transportrichtung des Transportmoduls abfällt.

Weiter hat es sich bewährt, wenn die Transportebene des Transportmoduls in der zweiten Betriebsausrichtung derart gegenüber der Horizontalen geneigt ist, dass sich zwischen dem Transportmodul und der Horizontalfördereinrichtung ein Schlitz zum Einbringen von Verpackungszuschnitten in einen Transportweg der Getränkebehälter ausbildet. Wenn mehrere Getränkebehälter zu einem Gebinde zusammengefasst werden sollen, kann es sein, dass für eine jeweilige Mehrzahl an Getränkebehältern ein jeweiliger Verpackungszuschnitt vorgesehen ist, auf dem die jeweiligen Getränkebehälter im fertigen Gebinde aufstehen. Ein solcher Verpackungszuschnitt, der auch als sekundäres Verpackungsmittel betrachtet werden kann, wird oftmals auch als Tray oder als PAD bezeichnet.

Durch die Neigung gegenüber der Horizontalen in der zweiten Betriebsausrichtung unter Ausbildung eines Schlitzes kann die Vorrichtung auf einfache Art und Weise in einen Betriebszustand gebracht werden, mit der solche Gebinde herstellbar sind, bei dem mehrere Getränkebehälter stehend auf einem Verpackungszuschnitt oder Tray zusammengefasst werden können.

Die Vorrichtung kann daher eine Zuführeinrichtung umfassen, über welche Verpackungszuschnitte durch den Schlitz in den Transportweg der Artikel einbringbar sind, wenn sich das Transportmodul in der zweiten Betriebsausrichtung befindet. Die Zuführeinrichtung kann eine Förderstrecke für Verpackungszuschnitte umfassen, die sich zumindest abschnittsweise unterhalb der Horizontalfördereinrichtung befindet.

Die Verpackungszuschnitte, welche in den Transportweg einbringbar sind, können eine Standfläche ausbilden, auf der mehrere Getränkebehälter gemeinsam positionierbar sind. Bei den Verpackungszuschnitten kann es sich um flächige Verpackungszuschnitte handeln, die bspw. aus Karton oder aus einem Verbundmaterial gefertigt sein können und die in der Praxis oftmals auch als PAD bezeichnet werden.

Die Vorrichtung kann zudem ein Einschlagmodul umfassen, das dem Transportmodul in einer Transportrichtung der Getränkebehälter nachgeordnet ist und über das Zuschnitte aus thermoplastischem Verpackungsmaterial auf Getränkebehälter aufbringbar sind. Dieses weitere Verpackungsmaterial kann wahlweise auch als tertiäres Verpackungsmittel betrachtet werden. Gemäß dieser Systematik werden die zu verpackenden Getränkebehälter als Primärverpackungen bezeichnet.

An das Einschlagmodul kann sich in diversen Ausführungsformen ein Schrumpftunnel anschließen, der dem Aufschrumpfen der passend dimensionierten und um die Gruppierungen geschlagenen Zuschnitte an thermoplastischem Verpackungsmaterial auf die jeweiligen Getränkebehälter dient.

Bei einer Verwendung von solchen thermoplastisch verformbaren und insbesondere unter Wärmeeinwirkung schrumpfbaren Verpackungsbahnen oder Verpackungsabschnitten zur Verpackung der gruppierten Getränkebehälter kann es sinnvoll sein, ohne die oben erwähnte Neigung des Transportmoduls zu arbeiten und somit auch ohne den sich dadurch ergebenden Schlitz oder Spalt, so dass bei einem solchen Verpackungsbetrieb, der ggf. auch als Shrink-Only-Betrieb betrachtet und bezeichnet werden kann, vorzugsweise keine Pads oder sonstigen Auflagen für die Behältergruppierungen in den Transportweg eingebracht werden. Somit können diese Verpackungsvarianten auch als alternative Varianten betrachtet werden, zwischen denen bedarfsweise gewechselt werden kann, ohne dass ein aufwendiger Umbau der Verpackungsanlage oder Packmaschine erforderlich wäre.

Weiter kann es sein, dass das Transportmodul zur Einnahme einer Warteposition ausgebildet ist, bei der das Transportmodul vollständig abgesenkt ist bzw. bei der die Transportebene des Transportmoduls gegenüber der ersten Betriebsausrichtung vollständig abgesenkt ist. Es hat sich hierbei bewährt, wenn die Vorrichtung zusätzlich ein Faltmodul mit mehreren umlaufend bewegten Faltfingern umfasst, welches in eine Betriebsposition überführbar ist, wenn sich das Transportmodul in der Warteposition befindet.

Wenn sich das Transportmodul in der Warteposition befindet, können Getränkebehälter somit von der Horizontalfördereinrichtung auf das Faltmodul übertreten, ohne dass die Getränkebehälter über das Transportmodul fortbewegt werden. Die Fortbewegung von Getränkebehältern kann hierbei über das Faltmodul erfolgen.

Wenn das Transportmodul erneut zur Fortbewegung von Getränkebehältern bewegt wird, kann das Faltmodul aus der Betriebsposition genommen und das Transportmodul insbesondere über mindestens einen Aktuator der Vorrichtung angehoben werden, bis es die erste Betriebsausrichtung oder die zweite Betriebsausrichtung eingenommen hat.

Auch kann es sein, dass das Transportmodul zur Fortbewegung der Getränkebehälter eine Überschubplatte und mehrere Schubstangen umfasst, welche mehreren Schubstangen derart umlaufend angetrieben sind, dass die Getränkebehälter über die mehreren Schubstangen gleitend entlang der Überschubplatte bewegbar sind.

Hierbei kann es sein, dass das Transportmodul zwei als Ketten und/oder Riemen ausgebildete und umlaufend geführte Endloszugmittel umfasst, wobei eine jeweilige Schubstange an den zwei als Kette und/oder Riemen ausgebildeten Endloszugmitteln angeordnet ist.

Eine solche Überschubplatte kann als technische Alternative zum oben erwähnten Transportband betrachtet werden und statt eines Transportbandes für die Beförderung der Getränkebehälter und/oder der Behältergruppierungen sorgen.

Bewährt hat es sich auch, wenn das Transportmodul zur Fortbewegung der Getränkebehälter ein umlaufend angetriebenes Transportband umfasst.

Die Vorrichtung kann mehrere insbesondere vertikal orientierte Hubachsen und/oder Hubelemente und wenigstens einen Aktuator umfassen, wobei die mehreren Hubachsen und/oder Hubelemente über den wenigstens einen Aktuator anhebbar und absenkbar sind, so dass das Transportmodul unter mechanischem Eingriff mit den mehreren Hubachsen in die mindestens zwei Betriebsausrichtungen überführbar ist.

Die Hubachsen und/oder Hubelemente können zudem jeweils entlang ihrer Längsrichtung bewegbar gelagert sein, so dass ein mechanischer Eingriff zwischen dem Transportmodul und den Hubachsen herstellbar und aufhebbar ist.

Auch kann die Vorrichtung einen Arretierungsmechanismus umfassen, über den das Transportmodul in der ersten Betriebsausrichtung, in der zweiten Betriebsausrichtung und/oder in der Warteposition festsetzbar ist. Der Arretierungsmechanismus kann mindestens eine Klinke umfassen, welche derart schwenkbar gelagert ist, dass das Transportmodul in der ersten Betriebsausrichtung, in der zweiten Betriebsausrichtung und/oder in der Warteposition mittels einer Schwenkbewegung der Klinke festsetzbar ist.

Anstelle oder ergänzend zu einer solchen Klinke kann der Arretierungsmechanismus weitere Mittel, wie insbesondere Rast- und/oder Schnapp- und/oder Klemmverbindungen umfassen, über die das Transportmoduls in der ersten Betriebsausrichtung, in der zweiten Betriebsausrichtung und/oder in der Warteposition festsetzbar ist.

Die Erfindung betrifft zudem ein Verfahren zum Umgang mit Getränkebehältern, bei dem Getränkebehälter über eine Horizontalfördereinrichtung bewegt werden. Merkmale, welche vorhergehend bereits zu diversen Ausführungsformen der erfindungsgemäßen Vorrichtung genannt wurden, können ebenso bei den nachfolgend beschriebenen Ausführungsformen des erfindungsgemäßen Verfahrens vorgesehen sein, ohne erneut erwähnt zu werden.

Auch können die nachfolgend zu den Ausführungsformen des erfindungsgemäßen Verfahrens beschriebenen Merkmale bei den Ausführungsformen der vorhergehend beschriebenen Vorrichtung vorgesehen sein, ohne erneut erwähnt zu werden. Die Vorrichtung kann zur Durchführung der nachfolgend beschriebenen Ausführungsformen des erfindungsgemäßen Verfahrens ausgebildet sein. Auch kann das Verfahren gemäß den nachfolgend beschriebenen Ausführungsformen mit einer Vorrichtung gemäß einem Ausführungsbeispiel der vorhergehenden Beschreibung durchgeführt werden.

Bei dem Verfahren treten die Getränkebehälter von der Horizontalfördereinrichtung auf ein Transportmodul über und werden über das Transportmodul fortbewegt. Das Transportmodul wird über einen ersten definierten Zeitraum in einer ersten Betriebsausrichtung betrieben und nachfolgend über einen zweiten definierten Zeitraum in einer zweiten Betriebsausrichtung. Eine Transportebene des Transportmoduls ist bei der ersten Betriebsausrichtung horizontal orientiert. Bei der zweiten Betriebsausrichtung ist die Transportebene des Transportmoduls gegenüber einer Horizontalen geneigt.

Es kann sein, dass die Transportebene des Transportmoduls in der zweiten Betriebsausrichtung in Transportrichtung des Transportmoduls abfällt. Auch kann es sein, dass die Transportebene des Transportmoduls in der zweiten Betriebsausrichtung in Transportrichtung des Transportmoduls ansteigt.

Zwischen der Transportebene des Transportmoduls und der Horizontalfördereinrichtung kann ein Schlitz ausgebildet sein, wenn sich das Transportmodul in der zweiten Betriebsausrichtung befindet. Über den Schlitz können Verpackungszuschnitte in einen Transportweg der Getränkebehälter eingebracht werden, wobei Getränkebehälter bei Übertritt auf das Transportmodul auf einen jeweiligen in den Transportweg eingebrachten Verpackungszuschnitt auffahren.

Weiter kann die Horizontalfördereinrichtung Getränkebehälter bewegen, welche Getränkebehälter hierbei auf Verpackungszuschnitten, die mehrere Laschen besitzen, aufstehen. Weiter kann es hierbei sein, dass Getränkebehälter mitsamt den Verpackungszuschnitten, auf denen die Getränkebehälter aufstehen, von der Horizontalfördereinrichtung auf das Faltmodul übertreten, welches Faltmodul die Getränkebehälter mitsamt den Verpackungszuschnitten über einen dritten definierten Zeitraum anstelle des Transportmoduls fortbewegt und hierbei über seine Faltfinger die Laschen der Verpackungszuschnitte in eine aufrechte Orientierung überführt.

Der Schlitz oder Spalt kann derart verlaufen, dass ein in ausschließlich horizontaler Richtung bewegter Verpackungszuschnitt durch den Schlitz oder den resultierenden Spalt geführt werden kann.

Wahlweise kann bei dem erfindungsgemäßen Verfahren vorgesehen sein, dass das Transportmodul in eine Warteposition abgesenkt wird und ein Faltmodul mit mehreren umlaufend bewegten Faltfingern in eine Betriebsposition überführt wird, wobei die Horizontalfördereinrichtung Getränkebehälter bewegt, welche Getränkebehälter hierbei auf Verpackungszuschnitten mit mehreren Laschen aufstehen.

Zudem kann vorgesehen sein, dass Getränkebehälter mitsamt den Verpackungszuschnitten, auf denen die Getränkebehälter aufstehen, von der Horizontalfördereinrichtung auf das Transportmodul übertreten, wobei das Faltmodul die Getränkebehälter mitsamt den Verpackungszuschnitten über einen dritten definierten Zeitraum anstelle des Transportmoduls fortbewegt und hierbei über seine Faltfinger die Laschen der Verpackungszuschnitte in eine aufrechte Orientierung überführt.

Eine weitere Verfahrensvariante kann vorsehen, dass das Transportmodul eine Überschubplatte und mehrere Schubstangen umfasst, wobei die mehreren Schubstangen umlaufend angetrieben werden und hierbei die Getränkebehälter gleitend entlang der Überschubplatte schieben oder bei welchem Verfahren das Transportmodul ein Transportband umfasst, das umlaufend angetrieben wird und hierbei die übergetretenen Getränkebehälter fortbewegt.

Das Verfahren kann zudem in einer Weise ausgestaltet sein, dass die Transportebene des Transportmoduls in der zweiten Betriebsausrichtung in Transportrichtung des Transportmoduls abfällt. Alternativ hierzu kann auch vorgesehen sein, dass die Transportebene des Transportmoduls in der zweiten Betriebsausrichtung in Transportrichtung des Transportmoduls ansteigt.

Schließlich sieht eine weitere Verfahrensvariante vor, dass mehrere vertikal orientierte Hubachsen und/oder Hubelemente vorgesehen sind, die mit dem Transportmodul mechanisch in Eingriff gebracht werden und über mindestens einen Aktuator bewegt werden können, wodurch das Transportmodul zwischen den Betriebsausrichtungen wechselt oder aus einer Betriebsausrichtung in die Warteposition bewegt wird bzw. aus der Warteposition in eine Betriebsausrichtung bewegt wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt eine schematische und perspektivische Ansicht einer Ausführungsvariante einer erfindungsgemäßen Vorrichtung, mit der Getränkebehälter befördert werden können.
Fig. 1B zeigt eine Frontansicht der Vorrichtung gemäß Fig. 1A.
Fig. 2A zeigt eine schematische Draufsicht auf einen Teil der Vorrichtung gemäß Figuren 1A und 1B, wobei hier ein Transportmodul gezeigt ist, das sich in einer ersten Betriebsausrichtung befindet.
Fig. 2B zeigt eine schematische Draufsicht gemäß Fig. 2A, wobei sich hier das Transportmodul in einer zweiten Betriebsausrichtung befindet.
Fig. 3 zeigt eine schematische Seitenansicht der Vorrichtung gemäß Figuren 1A und 1B.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren zum Umgang mit Getränkebehältern ausgestaltet sein können und stellen keine abschließende Begrenzung dar.

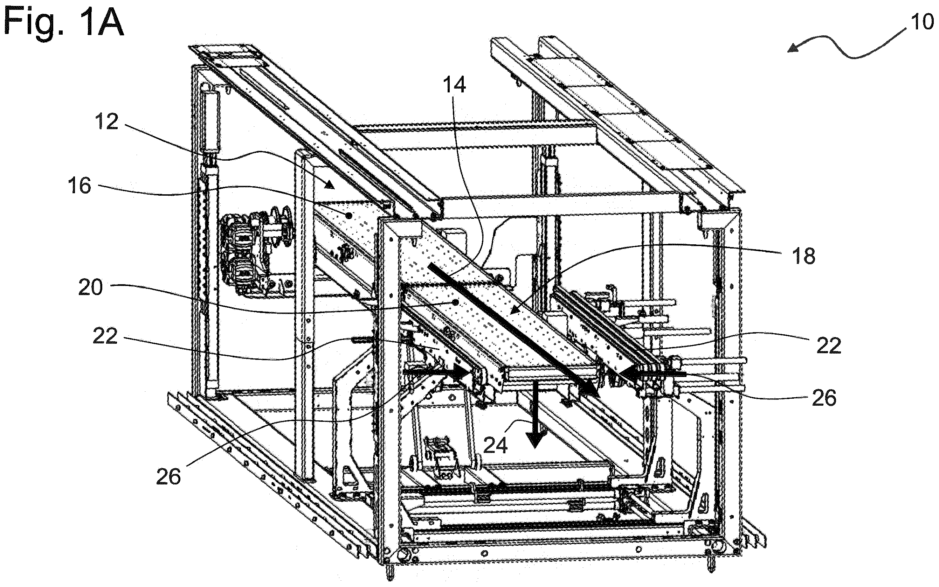

Die schematische Perspektivansicht der Fig. 1A zeigt eine sinnvolle Ausführungsvariante einer erfindungsgemäßen Vorrichtung 10 zum Umgang mit hier nicht gezeigten Getränkebehältern. Diese hier gezeigte Vorrichtung 10 kann insbesondere Bestandteil einer umfassenderen Verpackungsmaschine sein, die der Beförderung und der Verpackung von Getränkebehältern zum Zwecke der Ausbildung von Verpackungseinheiten, Gebinden oder sog. Sekundär- und/oder Tertiärverpackungen dienen kann.

Die erfindungsgemäße Vorrichtung 10 gemäß Fig. 1A umfasst eine Horizontalfördereinrichtung 12, die der Bewegung von Getränkebehältern in einer definierten Transportrichtung 14 dient. Die Horizontalfördereinrichtung 12 kann insbesondere durch ein endlos umlaufendes Transportband mit einer sich in Transportrichtung 14 bewegenden ersten Transportebene 16 gebildet sein, wobei diese erste Transportebene 16 bspw. durch ein Förderband aus Kunststoff- oder Elastomermaterial gebildet sein kann, auf dem die Getränkebehälter stehend und mit definierter Transportgeschwindigkeit in Transportrichtung 14 befördert werden können.

Wie es die Pfeilrichtung in der perspektivischen Darstellung der Fig. 1A erkennen lässt, weist die Transportrichtung 14 von links hinten nach rechts vorne.

An die Horizontalfördereinrichtung 12 schließt sich unmittelbar stromabwärts ein Transportmodul 18 zur Fortbewegung der Getränkebehälter an, die von der Horizontalfördereinrichtung 12 auf das Transportmodul 18 übergetreten sind, d.h. die Horizontalfördereinrichtung 12 und das Transportmodul 18 sind fluchtend hintereinander angeordnet. Das Transportmodul 18 kann wahlweise ebenso ein endlos umlaufendes Transportband mit einer sich in Transportrichtung 14 bewegenden zweiten Transportebene 20 aufweisen.

Auch diese zweite Transportebene 20 bspw. durch ein umlaufendes Förderband aus einem geeigneten Kunststoff- oder Elastomermaterial gebildet sein, auf dem die Getränkebehälter stehend und mit definierter Transportgeschwindigkeit in Transportrichtung 14 weiterbefördert werden können.

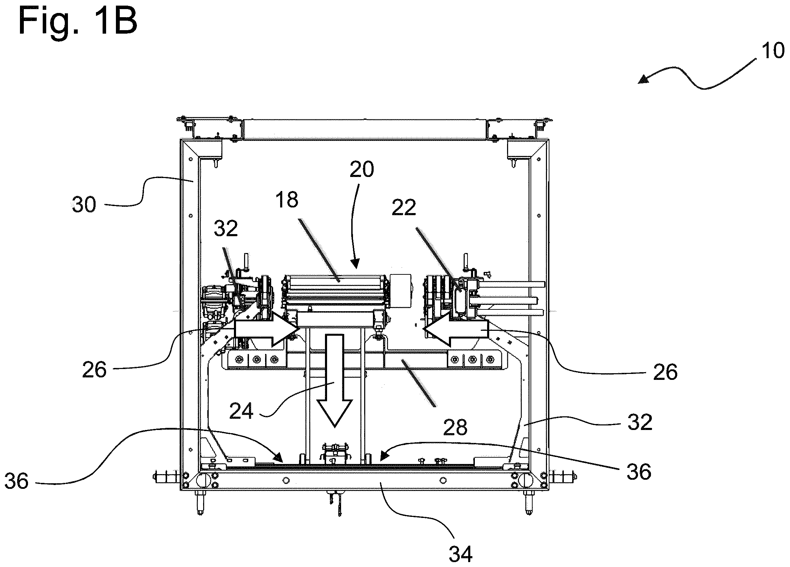

Alternativ hierzu könnte das Transportmodul 18 jedoch auch durch eine Förderebene oder Überschubplatte mit geeigneten Schubeinrichtungen wie bspw. sich in Transportrichtung 14 bewegenden Schubbalken zur Beförderung der auf der zweiten Transportebene 20 befindlichen Getränkebehälter gebildet sein, was in der schematischen Darstellung der Fig. 1 jedoch nicht gezeigt ist.

Wie es die schematische Perspektivdarstellung der Fig. 1A sowie die schematische Frontansicht der Fig. 1B in Zusammenschau erkennen lassen, kann das Transportmodul 18 in eine Warteposition gebracht werden, wobei die Transportebene 20 des Transportmoduls 18 gegenüber seiner normalen Position, die in Fig. 1A sowie in Fig. 1B gezeigt ist und die hier als erste Betriebsausrichtung bezeichnet werden soll, vollständig abgesenkt werden kann.

Sobald dies der Fall ist, d.h. sobald das Transportmodul 18 mit seiner zweiten Transportebene 20 abgesenkt ist, können stattdessen alternative Transportelemente in eine entsprechende Betriebsposition gebracht werden, die bspw. ein Faltmodul 22 mit mehreren umlaufend bewegten Faltfingern (hier nicht gezeigt) umfasst. Das zu beiden Seiten des Transportmoduls 18 befindliche Faltmodul 22 kann in seine Betriebsposition überführt werden, wenn und sobald sich das Transportmodul 18 in der Warteposition (hier nicht gezeigt) befindet.

Mehrere Pfeile sollen diese Option verdeutlichen, bei der das Transportmodul 18 wahlweise aus seiner regulären Betriebsposition, bei der es sich unmittelbar fluchtend an die Horizontalfördereinrichtung 12 anschließt, nach unten in Absenkrichtung 24 in eine Warteposition gebracht werden kann. Sobald das Transportmodul 18 abgesenkt ist, kann das zweiteilige Faltmodul 22 durch horizontale Verschiebung in Pfeilrichtung 26 in die zuvor vom Transportmodul 18 eingenommene Betriebsposition überführt werden, um insbesondere die Transportaufgabe zur Beförderung von PADs, Trays oder Verpackungszuschnitten als Unterlage für darauf beförderte Getränkebehälter übernehmen zu können, wobei hier nicht gezeigte Faltfinger Teile der Unterlagen während des Transports in Transportrichtung 14 nach oben falten können.

Damit ist gemeint, dass die beiden Hälften des zweiteiligen Faltmoduls 22, die sich zu beiden Längsseiten des in seiner Betriebsposition befindlichen Transportmoduls 18 in jeweiliger horizontaler Verschieberichtung 26, die quer zur Transportrichtung 14 ausgerichtet ist/sind, an die Stelle des zuvor in vertikaler Richtung 24 abgesenkten Transportmoduls 18 gebracht werden können, was insbesondere in der schematischen Frontansicht der Fig. 1B deutlich erkennbar ist. Um das Transportmodul 18 wieder in seine Betriebsposition zu bringen, müssen zuvor die Hälften des Faltmoduls 22 wieder auseinanderbewegt werden, und zwar in entgegengesetzte Richtung zur eingezeichneten Pfeilrichtung 26, bevor das Transportmodul 18 in entgegengesetzte Richtung zur Absenkrichtung 24 angehoben werden kann.

Um die beschriebene Absenkbarkeit des Transportmoduls 18 zu ermöglichen, kann das Förderelement des Transportmoduls 18 insbesondere an einem in vertikale Absenkrichtung 24 absenkbaren und in entgegengesetzte Richtung anhebbaren Rahmenelement 28 verankert sein, das lediglich in Fig. 1B durch eine entsprechende Bezugsziffer gekennzeichnet ist. Das Rahmenelement 28 mit dem darauf oberhalb befestigten Transportmodul 18 kann somit innerhalb eines Maschinenrahmens 30 der erfindungsgemäßen Vorrichtung 10 heb- und senkbar verankert sein.

Außerdem kann es sinnvoll sein, die beiden Hälften des Faltmoduls 22 in horizontale Richtungen innerhalb des Maschinenrahmens 30 verschiebbar zu verankern, wie dies ebenfalls in Fig. 1B gezeigt ist. Jede der beiden Hälften des Faltmoduls 22 ist an einem gekrümmten Rahmenelement 32 verankert, die bis zu einem unteren Querträger 34 des Maschinenrahmens 30 reichen und dort in einer Schlittenführung 36 geführt sind, so dass sie in die horizontalen Verschieberichtungen 26 entsprechend der in Fig. 1B eingezeichneten Pfeile bewegt oder in entgegengesetzte Richtungen zurückbewegt werden können.

Weiterhin ist bei der erfindungsgemäßen Vorrichtung 10 vorgesehen, dass das Transportmodul 18 zur Einnahme wenigstens zweier unterschiedlicher Betriebsausrichtungen ausgebildet ist, wobei eine Transportebene 20 des Transportmoduls 18 in einer ersten Betriebsausrichtung horizontal orientiert ist. Dies stellt gleichsam den üblichen Transportmodus der Vorrichtung 10 dar, bei der sowohl die erste Transportebene 16 der Horizontalfördereinrichtung 12 als auch die sich daran anschließende zweite Transportebene 20 des Transportmoduls 18 jeweils horizontal ausgerichtet sind und sich in gleicher Höhe unmittelbar aneinander anschließen, um den ungestörten Transport und Übergang der mittels der Vorrichtung 10 beförderten Getränkebehälter gewährleisten zu können.

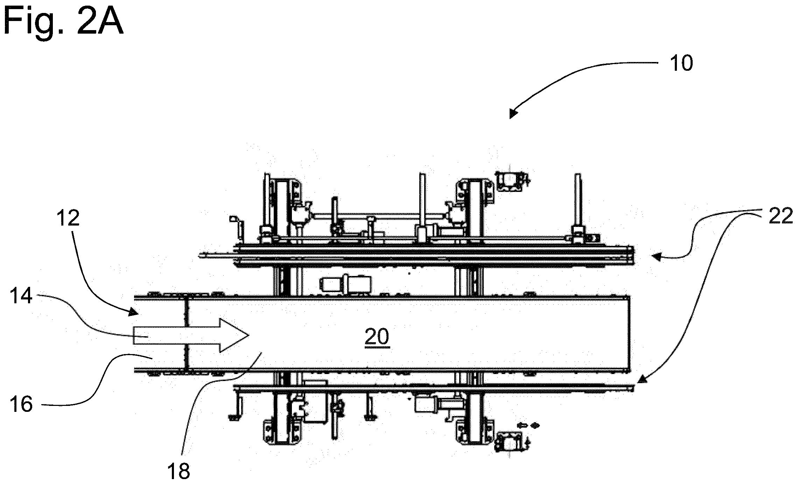

Diese erste Betriebsausrichtung kann aus der schematischen Draufsicht der Fig. 2A entnommen werden, bei der ein stufenloser Übergang beim Transport von Getränkebehältern von der ersten Transportebene 16 der Horizontalfördereinrichtung 12 auf die in derselben Höhe befindliche zweite Transportebene 20 des Transportmoduls 18 ermöglicht ist. Dieser übergangs- und annähernd stufenlose Weitertransport in Transportrichtung 14 ist durch den von links nach rechts weisenden Pfeil verdeutlicht, der die dort beförderten Getränkebehälter (nicht dargestellt) repräsentieren kann.

Zudem ist aber auch eine zweite Betriebsausrichtung für das Transportmodul 18 vorgesehen, bei welcher dieses gegenüber einer Horizontalen zumindest geringfügig geneigt ist. Hierbei kann insbesondere vorgesehen sein, dass die Transportebene 20 des Transportmoduls 18 in der zweiten Betriebsausrichtung derart gegenüber der Horizontalen geneigt ist, dass die Transportebene 20 entlang der Transportrichtung 14 des Transportmoduls 18 ansteigt. Für den angestrebten Zweck kann eine geringfügige Neigung des Transportmoduls 18 genügen.

Für unterschiedliche Verpackungsprozesse bzw. für unterschiedliche Betriebsmodi kann es bspw. sein, dass unterschiedliche Fördereinrichtungen verwendet werden, die an das Transportmodul 18 anschließen. So ist denkbar, dass in einem ersten Betriebsmodus eine Fördereinrichtung (hier nicht gezeigt) an das Transportmodul 18 anschließt, die Getränkebehälter auf einem ersten Höhenniveau bewegt. In einem weiteren Betriebsmodus kann diese Fördereinrichtung ausgetauscht und durch eine weitere Fördereinrichtung ggf. ersetzt werden, welche Getränkebehälter auf einem zweiten Höhenniveau bewegt. Da das Transportmodul 18 bei der zweiten Betriebsausrichtung gegenüber der Horizontalen geneigt ist, lassen sich hierdurch auf einfache Art und Weise unterschiedliche Höhenniveaus überwinden.

Für solche Fälle kann es bspw. sinnvoll sein, wenn das Transportmodul 18 in der zweiten Betriebsausrichtung gegenüber der Horizontalen bzw. gegenüber der horizontal verlaufenden Ebene um einen Winkel geneigt ist, welcher typischerweise kleiner als 20° ist, vorzugsweise jedoch kleiner als 10°.

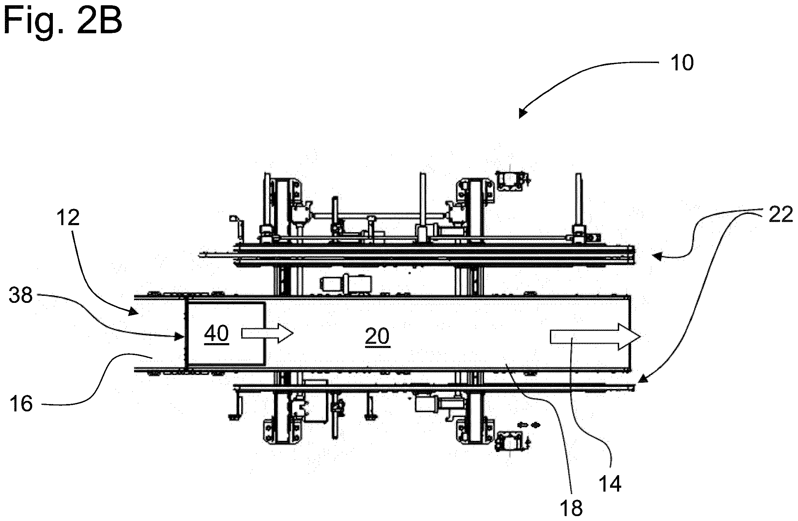

Bewährt haben sich in der Praxis darüber hinaus Ausführungsformen, bei denen mittels der Neigung des Transportmoduls in der zweiten Betriebsausrichtung ein Schlitz 38 ausgebildet wird, wie dies nachfolgend unter Bezugnahme auf die schematische Draufsicht der Fig. 2B beschrieben wird.

So kann es sinnvoll sein, die zweite Transportebene 20 des Transportmoduls 18 in der zweiten Betriebsausrichtung derart gegenüber der Horizontalen zu neigen, dass sich zwischen der Horizontalfördereinrichtung 12 und dem in Transportrichtung 14 nachfolgenden Transportmodul 18 ein quer zur Transportrichtung 14 verlaufender Schlitz 38 zum Einbringen von Verpackungszuschnitten in den Transportweg der Getränkebehälter ausbildet.

Der durch den Schlitz 38 von unterhalb der Horizontalfördereinrichtung 12 auf die zweite Transportebene 20 heraufbeförderte Verpackungszuschnitt ist in der Fig. 2B mit der Bezugsziffer 40 bezeichnet und durch einen Richtungspfeil gekennzeichnet, der in die Transportrichtung 14 weist.

Wenn mehrere Getränkebehälter zu einem Gebinde zusammengefasst werden sollen, kann es sein, dass für eine jeweilige Mehrzahl an Getränkebehältern ein jeweiliger Verpackungszuschnitt 40 vorgesehen ist, auf dem die jeweiligen Getränkebehälter im fertigen Gebinde aufstehen sollen. Ein solcher Verpackungszuschnitt 40, der auch als sekundäres Verpackungsmittel betrachtet werden kann, wird oftmals auch als Tray oder als PAD bezeichnet.

Bereits durch eine sehr geringe Neigung gegenüber der Horizontalen in der zweiten Betriebsausrichtung kann ein solcher Schlitz 38 ausgebildet werden, so dass die Vorrichtung 10 solchermaßen mit geringem Aufwand in einen Betriebszustand gebracht werden kann, mit dem solche Gebinde herstellbar sind, bei dem mehrere Getränkebehälter stehend auf einem Verpackungszuschnitt 40 oder Tray zusammengefasst werden können.

Bereits sehr geringe Neigungswinkel von deutlich weniger als 5° können den angestrebten Zweck erfüllen, nämlich die Ausbildung einer Zuführmöglichkeit von Verpackungszuschnitten 40 oder PADs durch den solchermaßen gebildeten Schlitz 38, so dass diese optional zuführbaren Verpackungszuschnitte 40 zwischen der Horizontalfördereinrichtung 12 und dem in Transportrichtung 14 nachfolgenden Transportmodul 18 zugeführt werden können, ohne dass dabei der Transport der Getränkebehälter gestört oder beeinträchtigt wird.

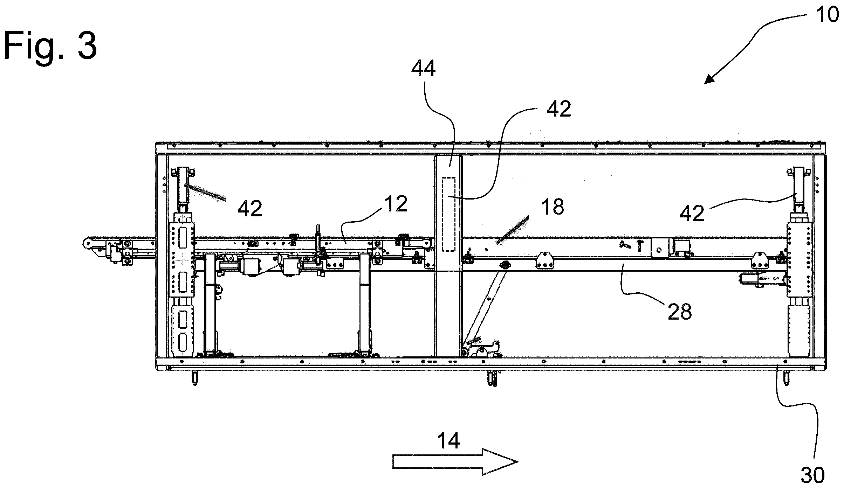

Die schematische Seitenansicht der Fig. 3 verdeutlicht nochmals die zuvor beschriebenen Komponenten der Vorrichtung 10, bei der innerhalb eines Maschinenrahmens 30 die Horizontalfördereinrichtung 12 sowie das in Transportrichtung 14 unmittelbar nachgeordnete Transportmodul 18 aufgehängt sind. Mittels innerhalb des Maschinenrahmens 30 angeordneter Hubelemente 42 kann insbesondere das Transportmodul 18 bzw. dessen Rahmenelement 28 (vgl. Fig. 1B) in einer Weise vorderseitig und/oder rückseitig angehoben werden, um dessen Neigung gegenüber einer Horizontalen zu verändern, so dass dadurch bei Bedarf der in Fig. 2B gezeigten Schlitz 38 ausgebildet werden kann.

Die Fig. 3 zeigt jeweils Hubelemente 42 an den beiden Schmalseiten des Maschinenrahmens 30, d.h. am stromaufwärts befindlichen vorderen Bereich der Horizontalfördereinrichtung 12 sowie am stromabwärts befindlichen hinteren Bereich des Transportmoduls 18. Vorzugsweise sind weitere Hubelemente 42 an mittigen vertikalen Rahmenstützen 44 angeordnet, mit deren Hilfe die vertikale Höhe des Transportmoduls 18 an seinem Übergangsbereich zur in Transportrichtung 14 vorgeordneten Horizontalfördereinrichtung 12 verstellt werden kann, um solchermaßen bedarfsweise den Schlitz 38 (vgl. Fig. 2B) ausbilden zu können.

Bei dieser Ausbildung des Schlitzes 38 ist vorgesehen, dass die Transportebene 20 des Transportmoduls 18 in der zweiten Betriebsausrichtung derart gegenüber der Horizontalen geneigt ist, dass die Transportebene 20 entlang der Transportrichtung 14 des Transportmoduls 18 ansteigt, wie dies oben beschrieben wurde.

Sofern dies für bestimmte Anwendungsfälle sinnvoll oder notwendig ist, kann es alternativ hierzu auch sein, dass die Transportebene 20 des Transportmoduls 18 in der zweiten Betriebsausrichtung derart gegenüber der Horizontalen geneigt ist, dass die Transportebene 20 entlang der Transportrichtung 14 des Transportmoduls 18 abfällt. Diese Einstellung, die mittels der Hubelemente 42 realisierbar ist, kann bspw. in solchen Fällen sinnvoll sein, bei denen sich die Abnahmehöhe eines dem Transportmodul 18 stromabwärts nachgeordneten weiteren Förderelement weiter unten befindet, so dass eine abfallende Neigung des Transportelements 18 bzw. dessen Transportebene 20 erforderlich sein kann.

Eine in den Figuren 1A bis 3 nicht gezeigte Variante kann auch vorsehen, dass das Transportmodul 18 zur Fortbewegung der Getränkebehälter eine Überschubplatte und mehrere Schubstangen umfasst, wobei diese mehreren Schubstangen insbesondere derart umlaufend angetrieben sein können, dass die Getränkebehälter über die mehreren Schubstangen gleitend entlang der Überschubplatte bewegbar sind.

Normalerweise jedoch kann die Vorrichtung 10 in der gezeigten Weise ein Transportmodul 18 aufweisen, bei dem die Transportebene 20 durch ein umlaufend angetriebenes Transportband zur Verfügung gestellt wird, auf dem die Getränkebehälter und/oder der als Unterlage für die Getränkebehälter dienende Verpackungszuschnitt 40 in Transportrichtung 14 bewegt wird.

Vorzugsweise kann ein geeigneter Arretierungsmechanismus vorgesehen sein, über den das Transportmodul 18 in der ersten Betriebsausrichtung, in der zweiten Betriebsausrichtung und/oder in der Warteposition jeweils festsetzbar ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Vorrichtung, Vorrichtung zum Umgang mit Getränkebehältern
12 Horizontalfördereinrichtung
14 Transportrichtung, Förderrichtung
16 Erste Transportebene
18 Transportmodul
20 Zweite Transportebene
22 Faltmodul
24 Absenkrichtung, vertikale Absenkung
26 Verschieberichtung, horizontale Verschiebung
28 Rahmenelement
30 Maschinenrahmen
32 Gekrümmtes Rahmenelement
34 Unterer Querträger
36 Schlittenführung
38 Schlitz
40 Verpackungszuschnitt
42 Hubelement
44 Mittige Rahmenstütze, vertikale Rahmenstütze

## Patentansprüche

1. Vorrichtung (10) zum Umgang mit Getränkebehältern, umfassend
- eine Horizontalfördereinrichtung (12) zur Bewegung von Getränkebehältern und
- ein Transportmodul (18) zur Fortbewegung von Getränkebehältern, die von der Horizontalfördereinrichtung (12) auf das Transportmodul (18) übergetreten sind, die Vorrichtung (10) **dadurch gekennzeichnet, dass**
- das Transportmodul (18) zur Einnahme wenigstens zweier unterschiedlicher Betriebsausrichtungen ausgebildet ist, wobei eine Transportebene (20) des Transportmoduls (18) in einer ersten Betriebsausrichtung horizontal orientiert ist und in einer zweiten Betriebsausrichtung gegenüber einer Horizontalen geneigt ist.

2. Vorrichtung (10) nach Anspruch 1, bei der
- die Transportebene (20) des Transportmoduls (18) in der zweiten Betriebsausrichtung derart gegenüber der Horizontalen geneigt ist, dass die Transportebene (20) entlang einer Transportrichtung (14) des Transportmoduls (18) ansteigt, oder bei der
- die Transportebene (20) des Transportmoduls (18) in der zweiten Betriebsausrichtung derart gegenüber der Horizontalen geneigt ist, dass die Transportebene (20) entlang einer Transportrichtung (14) des Transportmoduls (18) abfällt.

3. Vorrichtung (10) nach Anspruch 1 oder Anspruch 2, bei der die Transportebene (20) des Transportmoduls (18) in der zweiten Betriebsausrichtung derart gegenüber der Horizontalen geneigt ist, dass zwischen dem Transportmodul (18) und der Horizontalfördereinrichtung (12) ein Schlitz (38) zum Einbringen von Verpackungszuschnitten (40) in einen Transportweg der Getränkebehälter ausgebildet ist.

4. Vorrichtung (10) nach einem der Ansprüche 1 bis 3, bei der das Transportmodul (18) zur Einnahme einer Warteposition ausgebildet ist, bei der die Transportebene (20) des Transportmoduls (18) gegenüber der ersten Betriebsausrichtung vollständig abgesenkt ist.

5. Vorrichtung (10) nach Anspruch 4, welche ein Faltmodul (22) mit mehreren umlaufend bewegten Faltfingern umfasst, welches in eine Betriebsposition überführbar ist, wenn sich das Transportmodul (18) in der Warteposition befindet.

6. Vorrichtung (10) nach einem der Ansprüche 1 bis 5, bei der das Transportmodul (18) zur Fortbewegung der Getränkebehälter eine Überschubplatte und mehrere Schubstangen umfasst, welche mehreren Schubstangen derart umlaufend angetrieben sind, dass die Getränkebehälter über die mehreren Schubstangen gleitend entlang der Überschubplatte bewegbar sind.

7. Vorrichtung (10) nach einem der Ansprüche 1 bis 6, bei der das Transportmodul (18) zur Fortbewegung der Getränkebehälter ein umlaufend angetriebenes Transportband umfasst.

8. Vorrichtung (10) nach einem der Ansprüche 1 bis 7, mit mehreren vertikal orientierten Hubachsen und/oder Hubelementen (42) und mit wenigstens einem Aktuator, über den die mehreren Hubachsen und/oder Hubelemente (42) heb- und senkbar sind, wobei das Transportmodul (18) unter mechanischem Eingriff mit den mehreren Hubachsen und/oder Hubelementen (42) in die mindestens zwei Betriebsausrichtungen überführbar ist.

9. Vorrichtung (10) nach einem der Ansprüche 1 bis 8, umfassend einen Arretierungsmechanismus, über den das Transportmodul (18) in der ersten Betriebsausrichtung, in der zweiten Betriebsausrichtung und/oder in der Warteposition festsetzbar ist.

10. Verfahren zum Umgang mit Getränkebehältern, bei dem Getränkebehälter über eine Horizontalfördereinrichtung (12) bewegt werden, von der Horizontalfördereinrichtung (12) auf ein Transportmodul (18) übertreten und über das Transportmodul (18) fortbewegt werden, wobei das Transportmodul (18) über einen ersten definierten Zeitraum in einer ersten Betriebsausrichtung betrieben wird und nachfolgend über einen zweiten definierten Zeitraum in einer zweiten Betriebsausrichtung, bei welcher ersten Betriebsausrichtung eine Transportebene (20) des Transportmoduls (18) horizontal orientiert ist, und bei welcher zweiten Betriebsausrichtung die Transportebene (20) des Transportmoduls (18) gegenüber einer Horizontalen geneigt ist.

11. Verfahren nach Anspruch 10, bei dem die Transportebene (20) des Transportmoduls (18) in der zweiten Betriebsausrichtung in Transportrichtung (14) des Transportmoduls (18) abfällt, oder bei dem die Transportebene (20) des Transportmoduls (18) in der zweiten Betriebsausrichtung in Transportrichtung (14) des Transportmoduls (18) ansteigt.

12. Verfahren nach Anspruch 10 oder Anspruch 11, bei dem zwischen der Transportebene (20) des Transportmoduls (18) und der Horizontalfördereinrichtung (12) ein Schlitz (38) ausgebildet ist, wenn sich das Transportmodul (18) in der zweiten Betriebsausrichtung befindet, wobei über den Schlitz (38) Verpackungszuschnitte (40) in einen Transportweg der Getränkebehälter eingebracht werden und wobei Getränkebehälter bei Übertritt auf das Transportmodul (18) auf einen jeweiligen in den Transportweg eingebrachten Verpackungszuschnitt (40) auffahren.

13. Verfahren nach einem der Ansprüche 10 bis 12, bei welchem
- das Transportmodul (18) in eine Warteposition abgesenkt wird und ein Faltmodul (22) mit mehreren umlaufend bewegten Faltfingern in eine Betriebsposition überführt wird, wobei
- die Horizontalfördereinrichtung (12) Getränkebehälter bewegt, welche Getränkebehälter hierbei auf Verpackungszuschnitten (40) mit mehreren Laschen aufstehen, und wobei
- Getränkebehälter mitsamt den Verpackungszuschnitten (40), auf denen die Getränkebehälter aufstehen, von der Horizontalfördereinrichtung (12) auf das Transportmodul (18) übertreten, wobei das Faltmodul (22) die Getränkebehälter mitsamt den Verpackungszuschnitten (40) über einen dritten definierten Zeitraum anstelle des Transportmoduls (18) fortbewegt und hierbei über seine Faltfinger die Laschen der Verpackungszuschnitte (40) in eine aufrechte Orientierung überführt.

14. Verfahren nach einem der Ansprüche 1 bis 13, bei dem
- das Transportmodul (18) eine Überschubplatte und mehrere Schubstangen umfasst, wobei die mehreren Schubstangen umlaufend angetrieben werden und hierbei die Getränkebehälter gleitend entlang der Überschubplatte schieben, oder bei welchem Verfahren
- das Transportmodul (18) ein Transportband umfasst, das umlaufend angetrieben wird und hierbei die übergetretenen Getränkebehälter fortbewegt.

15. Verfahren nach einem der Ansprüche 10 bis 14, bei dem die Transportebene (20) des Transportmoduls (18) in der zweiten Betriebsausrichtung in Transportrichtung (14) des Transportmoduls (18) abfällt, oder bei dem die Transportebene (20) des Transportmoduls (18) in der zweiten Betriebsausrichtung in Transportrichtung (14) des Transportmoduls (18) ansteigt.

16. Verfahren nach einem der Ansprüche 10 bis 15, bei dem mehrere vertikal orientierte Hubachsen und/oder Hubelemente (42) vorgesehen sind, die mit dem Transportmodul (18) mechanisch in Eingriff gebracht werden und über mindestens einen Aktuator bewegt werden, wodurch das Transportmodul (18) zwischen den Betriebsausrichtungen wechselt oder aus einer Betriebsausrichtung in die Warteposition bewegt wird bzw. aus der Warteposition in eine Betriebsausrichtung bewegt wird.
